**Europäisches Patentamt**

**European Patent Office**

**Office européen des brevets**

(19)

(11) **EP 1 544 245 A1**

(12) **EUROPEAN PATENT APPLICATION**

(43) Date of publication:
**22.06.2005 Bulletin 2005/25**

(51) Int Cl.⁷: **C08L 23/08**, C08L 23/10, C08L 23/16, C08K 3/00, H01B 7/00

(21) Application number: **03445145.0**

(22) Date of filing: **17.12.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | • **Robinson, James Eliott**<br>**1332 Genval (BE)**<br>• **Ahlstrand, Lars-Erik**<br>**444 94 Ucklum (SE)**<br>• **D'Hooghe, Hans**<br>**9240 Zele (BE)** |
| (71) Applicant: **Borealis Technology Oy**<br>**06101 Porvoo (FI)** | (74) Representative: **Stenbäck, Maria Elisabeth**<br>**Awapatent AB,**<br>**P.O. Box 5117**<br>**200 71 Malmö (SE)** |
| (72) Inventors:<br>• **Hirvensalo, Matti**<br>**02110 Espoo (FI)**<br>• **Malm, Bo**<br>**02100 Espoo (FI)** | Remarks:<br>Amended claims in accordance with Rule 86 (2) EPC. |

(54) **An environmentally beneficial, flame retardant, halogen free polymer composition and cable**

(57)     An environmentally beneficial, flame retardant, halogen free polymer composition, which on a total of 100 % by weight comprises:

5-40 % by weight of a polar ethylene copolymer;
5-40 % by weight of a polypropylene (PP) polymer;
5-40 % by weight of an ethylene-propylene rubber (EPR) ;

1-10 % by weight of silicone;
20-40 % by weight of an inorganic filler which is a compound of a metal of Group IIA of the Periodic Table of Elements, excluding hydroxides and hydrated compounds.

An electric cable is also disclosed which comprises a conductor and is provided with a coating and/or sheathing of a polymer composition as defined above.

Fig. 1

**EP 1 544 245 A1**

**Description**

Field of the invention

The present invention relates to an environmentally beneficial, flame retardant, halogen free composition and to an electric cable comprising this composition.

Background of the invention

Poly(vinyl chloride) plastic (PVC) is today used widely in cables and wires for houshold appliances. These cables are e.g. solid or stranded conductors surrounded by PVC.
PVC cables have good flame retardant properties and are easy to handle due to their flexibility and plasticity. A result of the characteristic flexibility and plasticity of PVC cables is the so-called "dead behaviour", i.e. the behaviour causing cables to collapse onto a surface and lie flat on it.
However, PVC cables have several serious disadvantages from an environmental point of view, one of which is that they generate hydrogen chloride upon burning.
Therefore, there is an increasing demand from the market to replace PVC cables with cables produced from other, more environmentally acceptable polymers, such as polyolefin polymers.
It is not possible, however, to use plain ethylene-propylene polymers since they are elastic and resilient. Therefore, polyolefin compositions, such as ethylene-propylene polymers, normally have what may be called a "springiness" which is quite the opposite to the "dead behaviour" desired for compositions suitable for use as replacement for PVC.
In order to be able to replace PVC in cable and wire applications, a polymer composition must have features such as plasticity and flexibility, and thus a "dead behaviour", comparable to PVC. The polymer composition should of course also have a flame-retardancy equal to that of PVC. The new polyolefin composition according to the present invention has these features.

Summary of the invention

According to one aspect the present invention provides an environmentally beneficial, flame retardant, halogen free polymer composition, which based on a total of 100 % by weight comprises:

    5-40 % by weight of a polar ethylene copolymer;
    5-40 % by weight of a polypropylene (PP) polymer;
    5-40 % by weight of an ethylene-propylene rubber (EPR);
    1-10 % by weight of silicone;
    20-40 % by weight of an inorganic filler which is a compound of a metal of Group IIA of the Periodic Table of Elements, excluding hydroxides and hydrated compounds.

According to another aspect the present invention provides an electric cable comprising a conductor and provided with a coating and/or sheathing of a polymer composition as defined above.
These and other advantages and characterising features of the present invention will appear from the following specification and the appended claims.

Detailed description of the invention

The term "polar ethylene copolymer" used herein refers to an ethylene copolymer with a monomer providing polar side chains. Preferred examples of such polar ethylene copolymers are ethylene-butyl acrylate copolymers (EBA), ethylene-vinyl acetate copolymers (EVA), ethylene-methyl(meth) acrylate copolymers (EM(M)A), ethylene-ethyl(meth) acrylate copolymers (EE(M)A), and ethylene-(meth)acrylic acid copolymers (E(M)AA). Of these EBA copolymers are preferred, preferably having 5-30 % by weight of butyl acrylate, and more preferably having 15-30 % by weight of butyl acrylate.
The term "ethylene-propylene rubber" used herein refers to both EPR, i.e. rubber based on a copolymer of ethylene and propylene, and EPDM, i.e. rubber based on a terpolymer of ethylene, propylene and a diene.
The term "dead behaviour" used herein refers to the absence of elastic recovery, or inertness, after a given deformation. It has been found that the phenomenon called dead behaviour occurs for materials with specific relaxation times, i.e. the time needed for a specified decrease of the stress caused by application of a constant deformation. The relaxation time for a specific ethylene-propylene rubber blend is related to the ethylene/propylene ratio for that blend.

It is independent of the molecular weight which seems to control the elastic modulus. Specifically, it has been found that high ethylene or propylene contents give products with short relaxation times, whereas blends with an approximately 50/50 ratio give the desired dead behaviour closely matching that of PVC. Thus, the ethylene/propylene ratio in the ethylene-propylene rubber used according to the invention is approximately 40:60 - 60:40.

The term "copolymer" used herein includes both copolymers produced directly in the polymerisation reactor and graft copolymers in which one or more of the comonomers is grafted to a polymer backbone.

The term "silicone" used herein relates to a group of polymeric organic silicon compounds comprising a skeleton structure of alternate silicon and oxygen atoms according to the general formula

$$[-SiR_2-O-]_n$$

where R is an organic group such as e.g. methyl and n is a number such as to provide a liquid or solid silicone polymer.

The silicone compounds suitable according to the present invention are any silicone fluid (silicone oil) or silicone rubber suitable for use in organic polymers, such as organopolysiloxane polymers comprising chemically combined siloxy units selected from the group consisting of $R_3SiO_{0.5}$, $R_2SiO$, $R^1SiO_{1.5}$, $R^1R_2SiO_{0.5}$, $RR^1SiO$, $R^1_2SiO$, $RSiO_{1.5}$, and $SiO_2$ units and mixtures thereof in which R represents independently a saturated or unsaturated monovalent hydrocarbon radical, and each $R^1$ represents a radical such as R or a radical selected from the group consisting of a hydrogen atom, hydroxyl, alkoxy, aryl, vinyl or allyl radicals. An example of a suitable organosiloxane is polydimethylsiloxane.

The inorganic fillers suitable for use according to the invention are inorganic compounds of metals of Group IIA of the Periodic Table of Elements, excluding hydroxides and hydrated compounds. The inorganic filler is preferably compounds of magnesium and/or calcium, such as magnesium oxide, magnesium carbonate, calcium carbonate or huntite 2 $[Mg_3Ca(CO_3)_4]$. Although the inorganic filler is not a hydroxide nor a hydrated compound, it can contain small amounts of a hydroxide or small amounts of water, i.e. up to about 2 % by weight of hydroxide or water.

The Periodic Table of Elements referred to herein is the Table published on the inside cover of Perry et al. "Chemical Engineers' Handbook" 5th edition 1973, McGraw-Hill.

The composition according to the invention should have a limiting oxygen index (LOI) of at least 21. More preferably, the limiting oxygen index should be at least 25. The limiting oxygen index, according to ISO 4589-A-IV, is a measurement of the flame resistance of a product. To determine the LOI-value a test specimen of the composition to be evaluated is ignited in an atmosphere of a mixture of nitrogen and oxygen. The content of oxygen in the $N_2/O_2$ mixture is gradually decreased until the specimen stops burning. The percentage of $O_2$ in that $N_2/O_2$ mixture constitutes the LOI-value of the composition. A high LOI-value means that a high percentage of oxygen is needed to sustain combustion, i.e. the composition has a good flame resistance.

The polyolefin composition according to the invention should have an E-modulus of < 200 MPa, preferably < 150 MPa, and most preferably < 100 MPa. If the E-modulus is larger than 200 MPa, cables and wires produced with the composition will not have the desired plasticity properties. Furthermore the E-modulus is preferably larger than 35 MPa, since the material otherwise may be too soft.

Furthermore, it has been shown that a material exhibiting an overall modulus ($G_{sum}$) of 15-50 MPa, preferably 18-45 MPa, and a sum of the Elastic ratios (as defined below) at 1 and 10 seconds relaxation time divided by the elastic ratio at infinite time, of > 0.40, preferably > 0.45, has the behaviour desired according to the present invention.

The composition according to the present invention is suitable for use in cable and wire for household appliances, such as television sets, computers, vacuum cleaners, flexible cords, like table lamp cords, etc.

The invention will be further illustrated by the following, non-limiting examples.

The different compositions produced in the examples were analysed with regards to their relaxation and their dead behaviour. These features were determined as follows:

Test for determination of tensile strength and elongation:

The tensile strength and the elongation were determined for a tape with a thickness of approximately 1 mm by use of an Instron apparatus at a speed of 100 mm/min.

Test for determination of modulus of elasticity:

The E-modulus was determined by 3-point bending according to ISO 178.

Test for determination of dead behaviour:

The "dead behaviour" is determined based on measurements of stress relaxation using a conventional tensile testing machine (e.g. an Instron apparatus) in compression. Two commercial PVC materials are used as references that define the targeted property. The sample to be tested undergoes a constant strain while the stress is monitored.
The following equipment should be used for the test:

- Any compression machine capable of giving a constant deformation to a sample and capable of continuously monitoring the load values by a computer. The load cell of the machine should be capable of measuring in a range from 0 to 1000 N or 0 to 5000 N.
- A computer equipped with Microsoft Excel® or any other modern spread-sheet. A computer equipped with a suitable curve-fitting soft-ware program, e.g. MATHCAD®.
- A cutting device capable of cutting discs of 18 mm diameter (20, 22, 24 mm or more is sometimes used).
- A press for compression moulding plaques with a 4 mm thick spacer.
- A two-roll mill or any other sample homogeniser (e.g. a lab-extruder).

The samples are made in the following way:
The polymer is to be compression moulded into a plaque shape. The temperature for the moulding is totally depending on the type of material to be tested and can therefore not be specified. The thickness of the plaque is 4 mm ($\pm$ 0.5 mm). Prior to moulding, the material should be homogenised e. g. on a two-roll mill.
After moulding, discs are cut from the plaque by means of a cylindrical and very sharp knife. The knife should be driven through the plaque by means of a pressure device. The knife should have an internal diameter of 18 mm (or more).
After cutting discs and before testing, the plaque should be conditioned in a standard atmosphere of 23°C for at least 16 hours.
Four well cut discs are made into a cylindrical sample by piling the discs on top of each other in two pairs, where for each disc of a pair the direction in which the disc was cut is directed towards the other disc of the pair.
The sample has a longitudinal length of about 16 mm ($\pm$ 2 mm). The reason for this is that the length over diameter ratio of the cylindrical sample should always be smaller than 1.0, i.e. l/d $\leq$ 1.0. With higher l/d ratios the cylinder would tend to collapse or bend (buckle) under the applied test deformation.
The reason for pressing a plaque of 4 mm and piling up the discs is mainly because it is an easy way to produce a cylindrical sample with the desired dimensions. However, it is also an easy way to check for bubbles or voids in the sample. After the test the sample discs should be cut into smaller pieces and checked visually for voids. Any result obtained from samples containing voids should be disregarded.
As the purpose of this test is to make comparative studies, the effect of having four layers instead of one massive cylinder may be ignored.
The test procedure is as follows:

Make sure the testing machine is calibrated.

The test program should contain the following parameters:

- The test speed (v) should be 5 mm/min;
- The data points sampling rate should be at least 9.2 pts/second;
- The sample geometry should be cylindrical;
- The fixed strain should be 5 % of the original sample length.

The data describing the relaxation curve during 5 minutes are transferred to a suitable spread-sheet database and used, by means of a suitable curve-fitting soft-ware program, e.g. MATHCAD®, to give, by iteration, a mathematical function matching the relaxation curve.
Thus, to perform the test two different programs are needed, preferably as described below:

Program Compression 11 on the Instron (Precontact method) :

This method is developed to establish reproducible precontact between the test-rod and the pile of discs. Prepare a pile of 4 discs as described earlier and put it centrally under the compression device. As standard setting the accuracy of the load cell is set to 500 N for the 5 kN cell. The machine is programmed to travel at 5 mm/min until it registers a load of 3 N. At that point the cross-head stops travelling and maintains its position. Now exit the program and go to the next program (do not try to balance to load in between).

Program Compression 7 on the Instron:

Switch the Full Scale Load switch to a high value when the machine asks for the FSL. Give in the diameter of the sample and the length of the cylinder (measure the length of the cylinder with a calliper while the cylinder is under prestress. This means measuring the separation of the compression table and the compression rod). At this point, let the compression machine perform the 5 % strain with a fixed speed of 5 mm/min. Keep on the strain for a minimum of 5 minutes. Data is logged throughout the application of the 5 % strain and for 5 minutes thereafter. Let the test protocol also contain the maximum stress in MPa (for further control).

Calculation of the test results is made as follows:

The file is translated into an ASCII file and imported in EXCEL@. Use the data from the point where the cross-head stops travelling (at 5 % strain). This is the "stress relaxation switch-over to time" in the data sheet. Now the data have to be "cleared out". This means removing every value that is identical to the previous value. This is necessary to make the file usable for a MATCHAD® curve fit. The following algorithm can be used to "clear out" the data:

1) Open instron.MAD file in EXCEL@ (delimited and separated by commas).

2) Delete everything until you meet the sentence "stress relaxation swith-over to time". Delete everything above this sentence, including the sentence. This makes the time 0 to be the top row of the spreadsheet (start of relaxation).

3) Delete column A.

4) In column C do =B1-B2 and place this in cell C2. Use the fill down command to cover all data. Copy column C and paste in column D. Be sure to use special paste and values only. Now delete column C. Now sort on column C. Delete all the rows that have a zero or negative value in column C. Now delete column C. Now resort your data on column A (time).

5) Now you have to restart at 4) and do the procedure over again. The next time you come here you can proceed with 6).

6) Now the load data have to be converted from Newton to Pascal:

$$N/ (\pi \text{ x } r^3) = Pascal$$

where r is the radius of the discs in metres. E.g. for 18 mm discs the conversion factor is $1/0.00025447 \text{ m}^2$. Copy column C and paste in column D. Be sure to use special paste and values only. Now delete column C and B.

7) Now insert two blank columns between columns A and B. Multiply column A by 60 in column B (minutes to seconds). Copy column B and paste special in column C (values only). Now delete column A and B.

8) Save this file under the same name as you opened it (*.mad file).

A computer program such as MATCHAD® is used to match a mathematical function to the shape of the relaxation curve by iteration. Thereby values are assigned to factors used for a graphic presentation. By combining these factors in different ways on the two axis a pattern is obtained for all tested material that defines a target area in the graph.

The principle of the test is to characterise the deformation behaviour by means of the coefficients needed for a Maxwell type constitutive relationship. This is done according to the following relationship:

Overall Modulus = Modulus (Time Independent) + Modulus (Time Dependent)

or

$$Gsum = G_1 + f (G_2, G_3, G_4)$$

where

$G_1$ = the modulus at infinite relaxation time ($tau_{infinity}$);
$G_2$ = the modulus at 100 seconds relaxation time ($tau_2$);
$G_3$ = the modulus at 10 seconds relaxation time ($tau_3$); and

$G_4$ = the modulus at 1 second relaxation time ($tau_4$).

A way of presenting the results is to plot the sum of $G_3/G_1$ + $G_4/G_1$ versus the sum of $G_1 + G_2 + G_3 + G_4$ (i. e. $G_{sum}$), thus showing deadness against elasticity.

At the present invention the Elastic ratio $(G_3 + G_4)/G_1$ should be > 0.4, preferably >0.45, more preferably > 0.5.

Further, at the present invention the overall modulus ($G_{sum}$) should preferably lie in the range of 15-55 MPa, more preferably 18-50 MPa.

In the examples the following materials were used:

Polymer 1: an ethylene-butyl acrylate (EBA) copolymer with 27 % by weight of butyl acrylate and a $MFR_2$ = 4.0.

Polymer 2: 40 % by weight of silicone rubber + 60 % by weight of low density polyethylene (LDPE). $MFR_2$ = 1.

Filler 1: calcium carbonate.

Polymer 3: linear low density polyethylene (LLDPE) with an melt flow rate at 2 kg load of 30.

Polymer 4: a propylene-ethylene copolymer (PP-B) with 25 % by weight of ethylene used as an injection moulding compound.

Polymer 5: an ethylene-vinyl acetate (EVA) copolymer with 28 % by weight of vinyl acetate.

Polymer 6: an ethylene-vinyl acetate (EVA) copolymer with 19 % by weight of vinyl acetate.

Polymer 7: a very low density linear ethylene-butylene copolymer (VLLDPE) with an $MFR_2$ = 2.6 and a melting point, $T_m$ = 60.8°C. Density = 878 kg/m$^3$.

Polymer 8: a very low density linear polyethylene (VLLDPE) with an $MFR_2$ = 3.8 and a melting point, $T_m$ = 83.6°C.

Polymer 9: an ethylene-octene metallocene copolymer with an $MFR_2$ = 1.1 and a density of 880 kg/m$^3$.

Polymer 10: an ethylene-octene metallocene copolymer with an $MFR_2$ = 3.0 and a density of 902 kg/m$^3$.

Polymer 11: an ethylene-propylene rubber (EPR) with 48 % by weight of ethylene and a medium molecular weight distribution (MWD).

Polymer 12: an ethylene-propylene rubber (EPR) with 77 % by weight of ethylene and a narrow molecular weight distribution (MWD).

Polymer 13: an ethylene-propylene rubber (EPR) with 40 % by weight of ethylene and a very broad MWD.

Polymer 14: a heterophasic propylene-ethylene copolymer with 25 % by weight of EPR phase comprising 35 % by weight of ethylene. The matrix is a random copolymer with 3.5 % by weight of ethylene. $MFR_{2.16/230°C}$ = 8 g/ 10 min.

Polymer 15: a propylene block copolymer with 36 % by weight of rubber phase and a total ethylene content of 25 % by weight.

Polymer 16: an ethylene-butyl acrylate (EBA) copolymer with 17 % by weight of butyl acrylate (LDPE). $MFR_2$ = 1.1.

Polymer 17: an ethylene-propylene rubber (EPR) with 60 % by weight of ethylene. $MFR_{10/230°C}$ = 1.0.

Polymer 18: an ethylene-butyl acrylate (EBA) copolymer with 17 % by weight of butyl acrylate (LDPE). $MFR_2$ = 8.0.

AO-MB: 5 % by weight of stabiliser in LDPE. The stabiliser comprises 66 % by weight of an organic phosphite and 33 % by weight of a phenolic antioxidant.

Example 1-9

In each example a different composition was prepared. The compositions are shown in table 1, where the values are given in weight percent. The compositions were produced in the following way: the ingredients were first compounded in a Brabender mixer for 10 min at 160°C and 45 rpm. Their tensile strength, elongation and flame retardant properties were then evaluated, and the results are shown in table 2.

The Brabender mixtures were thereafter milled in a Moditec mill, and then their E-modulus and relaxation properties (Elastic ratio) were determined. These are also shown in table 2.

PVC has an E-modulus of 35-60 MPa and a ratio relaxation at top stress/relaxation at low stress of 0.4-0.7 (Top stress is at the start of the relaxation, low stress after 5 minutes of relaxation). None of the materials of this example are according to this invention and none of them fulfils both of these criteria. However, a combination of equal parts of Example 3 and Example 8, referred to below as Example 8A, fulfils both criteria and is according to the invention.

Table 1

| | Ex. 1 (600) | Ex. 2 (601) | Ex. 3 (602) | Ex. 4 (603) | Ex. 5 (604) | Ex. 6 (605) | Ex. 7 (606) | Ex. 8 (607) | Ex. 9 (608) |
|---|---|---|---|---|---|---|---|---|---|
| Polymer 1 | 57.3 | 17.3 | 17.3 | 17.3 | 17.3 | 17.3 | 17.3 | 17.3 | 17.3 |
| Polymer 2 | 12.5 | 12.5 | 12.5 | 12.5 | 12.5 | 12.5 | 12.5 | 12.5 | 12.5 |
| Filler 1 | 30 | 30 | 30 | 30 | 30 | 30 | 30 | 30 | 30 |
| Polymer 3 | - | 40 | - | - | - | - | - | - | - |
| Polymer 4 | - | - | 40 | - | - | - | - | - | - |
| Polymer 5 | - | - | - | 40 | - | - | - | - | - |
| Polymer 6 | - | - | - | - | 40 | - | - | - | - |
| Polymer 7 | - | - | - | - | - | 40 | - | - | - |
| Polymer 8 | - | - | - | - | - | - | 40 | - | - |
| Polymer 11 | - | - | - | - | - | - | - | 40 | - |
| Polymer 12 | - | - | - | - | - | - | - | - | 40 |
| Antioxidant | 0.2 | 0.2 | 0.2 | 0.2 | 0.2 | 0.2 | 0.2 | 0.2 | 0.2 |

Table 2

| | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Tensile strength (TS), MPa | 7.6 | 6.9 | 6.5 | 15.8 | 13.0 | 18.7 | 15.5 | 5.9 | 16.3 |
| Elongation, % | 693 | 600 | 154 | 667 | 563 | 752 | 670 | 710 | 667 |
| E-modulus, MPa | 53 | 169 | 271 | 50 | 134 | 47 | 80 | 10 | 46 |
| Elastic ratio, top stress/low stress | 0.72 | 0.63 | 0.54 | 0.76 | 0.71 | 0.81 | 0.78 | 0.44 | 0.73 |
| LOI, $\%O_2$ | 37 | 29 | 27 | 25 | 24 | 25 | 28 | 26 | 28 |

EP 1 544 245 A1

Example 10-13

Four compositions were prepared as in Example 1-9. Their compositions are shown in table 3 and their properties in table 4.

Table 3

|  | Example 10 (752) | Example 11 (753) | Example 12 (755) | Example 13 (756) |
|---|---|---|---|---|
| Polymer 18 | 13.5 | 13.5 | 13.5 | 13.5 |
| Filler 1 | 30 | 30 | 30 | 30 |
| AO-MB | 4 | 4 | 4 | 4 |
| Polymer 14 | 40 | - | 20 | 10 |
| Polymer 17 | - | 40 | 20 | 30 |
| Polymer 2 | 12.5 | 12.5 | 12.5 | 12.5 |

Table 4

|  | Example 10 | Example 11 | Example 12 | Example 13 |
|---|---|---|---|---|
| Tensile strength, MPa | 9.5 | 7.1 | 9.2 | 8.0 |
| Elongation; % | 475 | 700 | 630 | 680 |
| E-modulus, MPa | 298 | 12 | 62 | 27 |
| LOI, %$O_2$ | 36 | 30 | 30 | 25 |
| MFR(5 kg/230°C) | 16 | 0.6 | 3.3 | 1.4 |

Example 14-18

Five compositions were prepared as in Example 1-9. Their compositions and MFR values are shown in Table 5.

Table 5

|  | Example 14 (9706) | Example 15 (9707) | Example 16 (9708) | Example 17 (9709) | Example 18 (9710A) |
|---|---|---|---|---|---|
| Polymer 1 | - | - | 17.3 | - | 17.3 |
| Polymer 2 | 12.5 | 12.5 | 12.5 | 12.5 | 12.5 |
| Filler 1 | 30 | 30 | 30 | 30 | 30 |
| Polymer 15 | - | - | - | 20 | - |
| Polymer 16 | 17.3 | 17.3 | - | 17.3 | - |
| Polymer 14 | 20 | - | 20 | - | 20 |
| Polymer 17 | 20 | 40 | 20 | 20 | - |
| Polymer 9 | - | - | - | - | 20 |
| Antioxidant | 0.2 | 0.2 | 0.2 | 0.2 | 0.2 |
| MFR (2.16 kg/ 230°C) | 0.74 | 0.19 | 1.18 | 0.59 | 3.87 |

Examples 19-24 (Comparative)

Six compositions were prepared as in Example 1-9. Their compositions are shown in table 6. These compositions differ from the invention in that they do not include any polypropylene polymer.

Table 6

|  | Example 19 (dt1) | Example 20 (dt2) | Example 21 (dt3) | Example 22 (dt4) | Example 23 (dt5) | Example 24 (dt6) |
|---|---|---|---|---|---|---|
| Polymer 1 | 17.3 | 37.3 | 47.3 | 52.3 | 17.3 | - |
| Polymer 2 | 12.5 | 12.5 | 12.5 | 12.5 | 12.5 | 12.5 |
| Filler 1 | 30 | 30 | 30 | 30 | 30 | 30 |
| Polymer 11 | 40 | 20 | 10 | 5 | - | 20 |
| Polymer 13 | - | - | - | - | 40 | - |
| Polymer 10 | - | - | - | - | - | 37.3 |
| Antioxidant | 0.2 | 0.2 | 0.2 | 0.2 | 0.2 | 0.2 |

Test of "Dead behaviour"

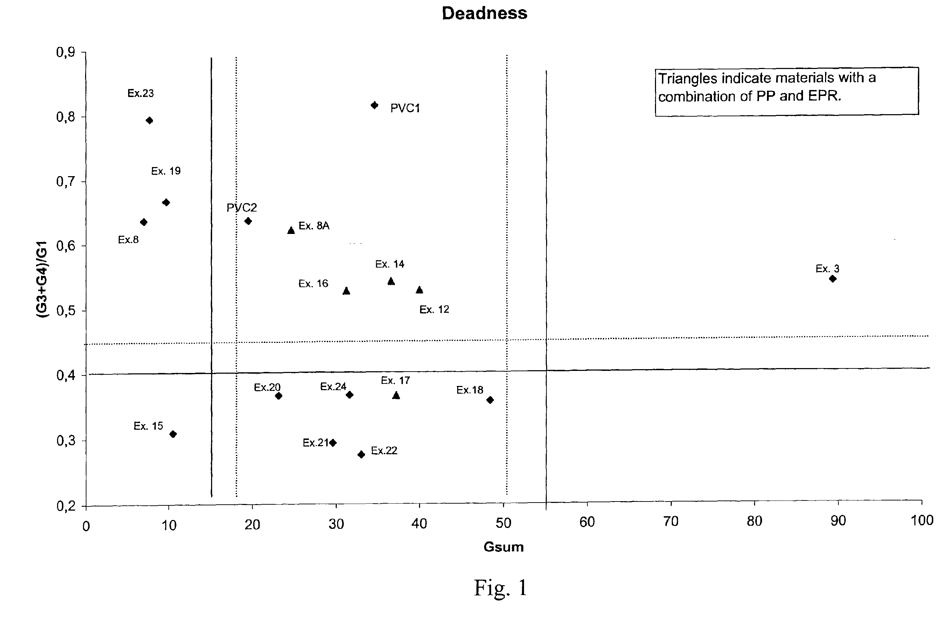

Two PVC reference compositions (PVC1 and PVC2) and the compositions of Examples 3, 8, 12, and 14-24 were tested for "dead behaviour" as described earlier. A composition referred to as Example 8A and consisting of a blend of equal parts by weight of the compositions of Example 3 and 8 was also tested. The moduli values $G_1$ (tau = infinite), $G_2$ (tau = 100 seconds), $G_3$ (tau = 10 seconds), $G_4$ (tau = 1 second) and $G_{sum}$ (= $G_1 + G_2 + G_3 + G_4$) are shown in table 7 together with the Elastic ratio $(G_3 + G_4)/G_1$. In the enclosed Figure 1 $G_{sum}$ is plotted versus $(G_3 + G_4)/G_1$.

Table 7

|  | $G_1$ | $G_2$ | $G_3$ | $G_4$ | $G_{sum}$ | $(G_3 + G_4)/G_1$ |
|---|---|---|---|---|---|---|
| PVC1 | 15.6 | 6.2 | 7.3 | 5.4 | 34.6 | 0.81 |
| PVC2 | 9.9 | 3.4 | 3.8 | 2.5 | 19.5 | 0.64 |
| Ex 3 (602) | 45.9 | 18.5 | 15.5 | 9.3 | 89.2 | 0.54 |
| Ex 8 (607) | 3.3 | 1.6 | 1.5 | 0.6 | 7.0 | 0.64 |
| Ex 8A | 11.9 | 5.3 | 5.0 | 2.4 | 24.6 | 0.62 |
| Ex 12 (755) | 21.2 | 7.6 | 7.2 | 4.0 | 40.0 | 0.53 |
| Ex 14 (9706) | 19.2 | 7.1 | 6.7 | 3.7 | 36.6 | 0.54 |
| Ex 15 (9707) | 6.8 | 1.5 | 1.4 | 0.7 | 10.5 | 0.31 |
| Ex 16 (9708) | 16.5 | 6.0 | 5.8 | 2.9 | 31.3 | 0.53 |
| Ex 17 (9709) | 22.7 | 6.2 | 5.3 | 3.0 | 37.2 | 0.37 |
| Ex 18 (9710A) | 29.4 | 8.5 | 6.8 | 3.7 | 48.4 | 0.36 |
| Ex 19 (dt1) | 4.5 | 2.2 | 2.2 | 0.8 | 9.7 | 0.67 |
| Ex 20 (dt2) | 14.2 | 3.7 | 3.5 | 1.7 | 23.1 | 0.37 |
| Ex 21 (dt3) | 20.1 | 3.5 | 3.7 | 2.2 | 29.6 | 0.29 |
| Ex 22 | 22.9 | 3.7 | 3.9 | 2.4 | 33.0 | 0.28 |
| (dt4) |  |  |  |  |  |  |
| Ex 23 (dt5) | 3.4 | 1.6 | 1.8 | 0.9 | 7.7 | 0.79 |
| Ex 24 (dt6) | 20.2 | 3.9 | 4.7 | 2.7 | 31.6 | 0.37 |

In summary it may be concluded that a line is drawn between polypropylene containing materials and non-polypropylene containing materials. The non-propylene containing materials tend to be either dead with a low E-modulus or not dead with a higher E-modulus. The polypropylene seems mandatory to obtain a reasonable balance between deadness and stiffness.

Further, the method for testing dead behaviour is proved to be accurate and repeatable.

Also, the deadness/stiffness graph according to Figure 1 provides a good scanning tool.

**Claims**

1. An environmentally beneficial, flame retardant, halogen free polymer composition, which on a total of 100 % by weight comprises:

   5-40 % by weight of a polar ethylene copolymer;
   5-40 % by weight of a polypropylene (PP) polymer;
   5-40 % by weight of an ethylene-propylene rubber (EPR) ;
   1-10 % by weight of silicone;
   20-40 % by weight of an inorganic filler which is a compound of a metal of Group IIA of the Periodic Table of Elements, excluding hydroxides and hydrated compounds.

2. A composition according to claim 1, wherein the polar ethylene copolymer is an EBA, EVA, EMA, EMMA, EEA, EEMA, EAA or EMAA copolymer.

3. A composition according to claim 2, wherein the polar ethylene copolymer is an EBA copolymer which includes 5-30 % by weight, preferably 15-30 % by weight of butyl acrylate.

4. A composition according to any one of the preceding claims, wherein the polypropylene polymer is a heterophasic polypropylene block copolymer.

5. A composition according to claim 4, wherein the polypropylene polymer has an elasticity module of 200-600 MPa.

6. A composition according to any one of the preceding claims, wherein the ethylene-propylene rubber includes 40-60 % by weight of ethylene.

7. A composition according to any one of the preceding claims, which comprises

   20-30 % by weight of polar ethylene copolymer;
   15-25 % by weight of PP;
   15-25 % by weight of EPR;
   3-10 % by weight of silicone;
   25-40 % by weight of inorganic filler; and
   0.05-4 % by weight of a stabilizing agent.

8. A composition according to any one of the preceding claims, wherein the composition has an overall modulus (Gsum) consisting of the sum of the modulus at infinite relaxation time ($G_1$) and the moduli at 1, 10 and 100 seconds relaxation time ($G_4$, $G_3$ and $G_2$, respectively) of 15-55 MPa, preferably 18-50 MPa.

9. A composition according to any one of the preceding claims, wherein the composition has a ratio $(G_3 + G_4)/G_1$ of > 0.4, preferably > 0.45, where $G_3$ is the modulus at 10 seconds relaxation time, $G_4$ is the modulus at 1 second relaxation time, and $G_1$ is the modulus at infinite relaxation time.

10. A composition according to any one of the preceding claims, wherein the composition has an elasticity modulus of < 200 MPa.

11. A composition according to any one of the preceding claims, wherein the composition has a limiting oxygen index, LOI, of $\geq 25$.

12. An electric cable comprising a conductor and provided with a coating and/or sheathing of a polymer composition as defined above.

**Deadness**

Fig. 1

**European Patent Office**

**EUROPEAN SEARCH REPORT**

Application Number

EP 03 44 5145

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 393 959 A (BP CHEM INT LTD) 24 October 1990 (1990-10-24) * the whole document * ----- | 1-7,12 | C08L23/08 C08L23/10 C08L23/16 C08K3/00 H01B7/00 |
| Y | EP 1 316 581 A (BOREALIS TECH OY) 4 June 2003 (2003-06-04) * the whole document * ----- | 1-7,12 | |
| Y | PATENT ABSTRACTS OF JAPAN vol. 2003, no. 06, 3 June 2003 (2003-06-03) & JP 2003 056762 A (FUJIKURA LTD), 26 February 2003 (2003-02-26) * abstract * ----- | 1-7,12 | |
| Y | EP 0 973 174 A (SUMITOMO WIRING SYSTEMS) 19 January 2000 (2000-01-19) * the whole document * ----- | 1-7,12 | |
| Y | EP 0 893 801 A (PIRELLI CAVI E SISTEMI SPA) 27 January 1999 (1999-01-27) * the whole document * ----- | 1-7,12 | **TECHNICAL FIELDS SEARCHED (Int.Cl.7)** C08L C08K H01B |

The present search report has been drawn up for all claims

| Place of search | Date of completion of the search | Examiner |
|---|---|---|
| The Hague | 19 May 2004 | Droghetti, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 544 245 A1**

**ANNEX TO THE EUROPEAN SEARCH REPORT
ON EUROPEAN PATENT APPLICATION NO.**　　　EP 03 44 5145

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2004

| Patent document cited in search report | | Publication date | Patent family member(s) | | Publication date |
|---|---|---|---|---|---|
| EP 0393959 | A | 24-10-1990 | AT | 129272 T | 15-11-1995 |
| | | | AU | 627296 B2 | 20-08-1992 |
| | | | AU | 5372090 A | 25-10-1990 |
| | | | CA | 2014357 A1 | 21-10-1990 |
| | | | DE | 69023039 D1 | 23-11-1995 |
| | | | DE | 69023039 T2 | 21-03-1996 |
| | | | DK | 393959 T3 | 05-02-1996 |
| | | | EP | 0393959 A2 | 24-10-1990 |
| | | | ES | 2077644 T3 | 01-12-1995 |
| | | | IN | 180083 A1 | 10-01-1998 |
| | | | JP | 2300249 A | 12-12-1990 |
| | | | JP | 3037713 B2 | 08-05-2000 |
| | | | NO | 901755 A | 22-10-1990 |
| | | | NZ | 233370 A | 25-06-1991 |
| | | | US | 5091453 A | 25-02-1992 |
| EP 1316581 | A | 04-06-2003 | EP | 1316581 A1 | 04-06-2003 |
| | | | WO | 03046064 A1 | 05-06-2003 |
| JP 2003056762 | A | 26-02-2003 | NONE | | |
| EP 0973174 | A | 19-01-2000 | JP | 2000026696 A | 25-01-2000 |
| | | | EP | 0973174 A1 | 19-01-2000 |
| | | | US | 6190772 B1 | 20-02-2001 |
| EP 0893801 | A | 27-01-1999 | IT | MI971741 A1 | 25-01-1999 |
| | | | AT | 264538 T | 15-04-2004 |
| | | | AT | 234502 T | 15-03-2003 |
| | | | AU | 752111 B2 | 05-09-2002 |
| | | | AU | 7730698 A | 04-02-1999 |
| | | | AU | 736015 B2 | 26-07-2001 |
| | | | AU | 8631398 A | 16-02-1999 |
| | | | BR | 9802553 A | 21-12-1999 |
| | | | BR | 9810782 A | 25-07-2000 |
| | | | CA | 2243419 A1 | 23-01-1999 |
| | | | CA | 2297155 A1 | 04-02-1999 |
| | | | DE | 69812103 D1 | 17-04-2003 |
| | | | DE | 69812103 T2 | 11-12-2003 |
| | | | DE | 69823107 D1 | 19-05-2004 |
| | | | WO | 9905688 A1 | 04-02-1999 |
| | | | EP | 0893801 A1 | 27-01-1999 |
| | | | EP | 0998747 A1 | 10-05-2000 |
| | | | ES | 2194336 T3 | 16-11-2003 |
| | | | JP | 11111061 A | 23-04-1999 |
| | | | JP | 2001511582 T | 14-08-2001 |
| | | | NZ | 330986 A | 28-05-1999 |

For more details about this annex : see Official Journal of the European Patent Office, No. 12/82

14

**ANNEX TO THE EUROPEAN SEARCH REPORT
ON EUROPEAN PATENT APPLICATION NO.**                    EP 03 44 5145

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2004

| Patent document cited in search report | Publication date | Patent family member(s) | Publication date |
|---|---|---|---|
| EP 0893801 A | | NZ 502081 A | 31-05-2002 |
| | | US 6162548 A | 19-12-2000 |
| | | US 6372344 B1 | 16-04-2002 |
| | | US 6552112 B1 | 22-04-2003 |

EPO FORM P0459

For more details about this annex : see Official Journal of the European Patent Office, No. 12/82